# EUROPÄISCHE PATENTSCHRIFT

(11) **EP 2 525 050 B1**
(45) Veröffentlichungstag und Bekanntmachung des Hinweises auf die Patenterteilung: **20.06.2018**
(21) Anmeldenummer: 12160695.8
(22) Anmeldetag: 22.03.2012
(51) Int. Cl.: F01D 25/24, F02C 6/12, F01D 9/02, F04D 29/42, F02B 37/02

(54) **Abgasturbolader**
Exhaust gas turbocharger
Turbocompresseur de gaz d'échappement

(30) Priorität: 19.05.2011 DE 102011050506
(43) Veröffentlichungstag der Anmeldung: 21.11.2012
(73) Patentinhaber: Benteler Automobiltechnik GmbH, 33102 Paderborn (DE)
(72) Erfinder: Grußmann, Elmar, 33184 Altenbeken (DE)
(74) Vertreter: Ksoll, Peter

(56) Entgegenhaltungen:
- WO-A1-02/06637
- JP-A- 2002 054 447
- JP-A- 2007 002 791
- JP-A- 2011 069 364

## Beschreibung

Die vorliegende Erfindung betrifft ein Turbinengehäuse eines Abgasturboladers, wobei das Turbinengehäuse ein Außengehäuse und ein Innengehäuse gemäß den Merkmalen im Oberbegriff von Patentanspruch 1 aufweist.

Verbrennungskraftmaschinen, insbesondere im Einsatz für Kraftfahrzeuge, werden in zunehmendem Maße durch Strömungsmaschinen aufgeladen, um den Wirkungsgrad bei gleichbleibendem Hubraum zu verbessern. Hierdurch steht entweder mehr Leistung zur Verfügung oder aber es wird bei gleichbleibender Leistung weniger Kraftstoff und somit auch weniger CO2-Ausstoß produziert.

Im Zuge der Motorenentwicklung wird eine Auflademaschine oder aber eine Strömungsmaschine, insbesondere ein Turbolader an die Leistungscharakteristik des jeweiligen Motors angepasst.

Damit der Turbolader selber mit einem hohen Wirkungsgrad arbeiten kann, ist die Einhaltung exakter Spaltmaße einzelner Bauteile des Turboladers vor, während und nach dem Betrieb von besonderer Bedeutung. Zwischen den einzelnen Betriebszuständen treten Temperaturunterschiede von bis zu mehreren 100° C auf, die bei den verschiedenen Bauteilen und bei eingesetzten Werkstoffen sowie Materialstärken voneinander abweichende Wärmeausdehnungen der Bauteile untereinander zur Folge haben.

Im Falle der Ausdehnung ändern sich auch die Spaltmaße zwischen den einzelnen Bauteilen, sodass ein unerwünschter Blow-by-Effekt innerhalb des Turboladers auftreten kann, der wiederum den Wirkungsgrad herabsetzt. Ebenfalls kann es dazu kommen, dass die Bauteile durch unterschiedliche Ausdehnungen miteinander in Kontakt kommen, schlimmstenfalls entstehen Kollisionen der Bauteile untereinander, die wiederum Schäden oder aber einen totalen Ausfall des Turboladers mit sich bringen.

Weiterhin ist die Gewichtsreduzierung bei im Kraftfahrzeugbau eingesetzten Materialien und Komponenten von besonderer Bedeutung. Hierbei steht die Herstellung eines Turboladers, insbesondere eines Turboladergehäuses in Blechbauweise unter dem Aspekt einer Möglichkeit, einen Abgasturbolader besonders gewichtsoptimiert herzustellen.

Beispielsweise ist aus der DE 100 22 052 A1 die Entkopplung von abgasführenden Bauteilen und tragenden bzw. dichtenden Außenstrukturen vorgeschlagen. Während die abgasführenden Bauteile eines Turboladers hohen thermischen Belastungen ausgesetzt sind, sodass sie im Betrieb glühen, sind die thermischen Belastungen der dichtenden Außenstrukturen bedeutend geringer. Allerdings unterliegt auch das Außengehäuse, besonders in den Bereichen der Anbindung an das Lagergehäuse eines Turboladers und auch an den Einströmseiten des relativ heißen Abgases, sehr hohen thermischen und strömungstechnischen Belastungen.

In der Regel liegen die Innengehäuse an den Lagerflanschen an oder sind zusätzlich mit diesen stoffschlüssig gekoppelt. Hier kann es jedoch im Falle des Anliegens über die verschiedenen thermischen Ausdehnungskoeffizienten zu Undichtigkeiten und somit zu einem Blow-by kommen. Im Falle einer stoffschlüssigen Koppelung ist die Wärmeeinflusszone des thermischen Gefügevorganges geometrisch und werkstofftechnisch durch den thermischen Fügevorgang geschwächt. An dieser Stelle kann es unter extremen Belastungen oder aber über die Betriebsdauer eines Turboladers zu Rissbildung und somit auch zu Ermüdungsbrüchen oder Undichtigkeiten kommen. Ein Turbinengehäuse gemäß dem Stand der Technik ist auch in dem Dokument JP2002 054447 offenbart. Aufgabe der vorliegenden Erfindung ist es daher, die Dichtigkeit und die Dauerhaltbarkeit eines Abgasturboladers derart zu erhöhen, dass thermische Belastungen nicht zu einem frühen Bauteilversagen führen und das thermisch bedingte Ausdehnungen durch den Aufbau des Abgasturboladers kompensiert werden.

Die zuvor genannte Aufgabe wird mit den Merkmalen gemäß Patentanspruch 1 gelöst.

Vorteilhafte Ausführungsvarianten der vorliegenden Erfindung sind Bestandteil der abhängigen Patentansprüche.

Bei einem Abgasturbolader ist das Turbinengehäuse aus einem Außengehäuse und einem Innengehäuse aufgebaut, wobei das Innengehäuse mit einem rohrförmigen Stutzen zur Anbindung eines Lagergehäuses eines Turbinenrades gekoppelt ist, wobei das Innengehäuse und der Stutzen formschlüssig miteinander gekoppelt sind. Der Abgasturbolader ist erfindungsgemäß dadurch gekennzeichnet, dass das Innengehäuse den Stutzen durchgreift und an einem Flanschkragen des Stutzens radial nach außen umgebördelt ist, wobei an dem umgebördelten Ende ein Pressring zur zusätzlichen Lagefixierung angeordnet ist.

Durch den Pressring wird das Rückfedern des Blechmaterials, welches umgebördelt wurde, verhindert. Hierdurch wird bereits während des Herstellungsprozesses ein optimaler Sitz zwischen Stutzen und Innengehäuse ermöglicht. Weiterhin wird durch die verschiedenen thermischen Ausdehnungen von Innengehäuse und Stutzen, welche durch die verschiedenen Materialstärken und auch gegebenenfalls durch die verschiedenen Werkstoffe hervorgerufen wird, ein relatives Verrutschen durch den Pressring verhindert. Weiterhin wird eine reibschlüssige Verbindung zwischen dem umgebördelten Ende sowie dem Flanschkragen durch den Pressring hergestellt. Der Pressring erhöht somit die Druckdichtigkeit. Ein Blow-by-Effekt wird dadurch weitestgehend vermieden.

In einer bevorzugten Ausführungsvariante der vorliegenden Erfindung wird das umgebördelte Ende des Innengehäuses im Querschnitt C-förmig umgebördelt ausgebildet. Hierdurch wird in einem bogenförmigen Verlauf über eine Fläche mit einem Radius von circa 180° eine vollflächige Anlage hergestellt, was sich positiv auf die Druckdichtigkeit auswirkt. Weiterhin wird durch die im Querschnitt C-förmig konturierte Umbördelung in axialer und radialer Richtung eine formschlüssige Koppelung hergestellt. Diese dient insbesondere der Kompensation der thermischen Ausdehnung des Innengehäuses gegenüber dem Stutzen. Ein weiterer Vorteil der C-förmigen Konfiguration der Umbördelung ist das Prinzip der Kragenumstellung. Hierdurch werden Spannungsspitzen vermieden, was wiederum Rissbildungen und/oder Brüchen vorbeugt. Ebenfalls wirkt sich die C-förmig konturierte Umbördelung auf die Relativbeweglichkeit der Bauteile zueinander aus. Hierdurch wird beispielsweise bei Temperaturwechselbelastungen ein maginales Spiel zwischen Stutzen und Innengehäuse ermöglicht, wohingegen durch den Pressring an dem umgebördelten Ende stets ein fester und druckdichter Sitz sichergestellt ist.

In einer weiteren vorteilhaften Ausführungsvariante ist der Flanschkragen in radialer Richtung der Turbinenraddrehachse zeigend wulstartig ausgebildet. Im Zusammenspiel mit dem Innengehäuse kann somit in axialer Richtung aufgrund der geometrischen Ausbildung des Innengehäuses eine Kompensierung der thermischen Ausdehnung durch das Innengehäuse selber und in radialer Richtung eine Kompensation der unterschiedlichen thermischen Ausdehnungen durch das C-förmig, um den wulstartig ausgebildeten Flanschkragen umgebördelte Ende, sichergestellt werden. Der Flanschkragen ist dazu bevorzugt auf dem Flanschstutzen umlaufend auf die Turbinenraddrehachse zuzeigend ausgebildet.

In einer weiteren bevorzugten Ausführungsvariante der vorliegenden Erfindung liegt das Innengehäuse in radialer Richtung, zumindest abschnittsweise, an dem Stutzen an. Das Innengehäuse ist relativ zu dem Stutzen selber nur aus sehr dünnem Werkstoff ausgebildet. In der Folge dehnt es sich, da es zudem auch direkten Kontakt mit dem heißen Abgas hat, schneller aus. Durch die radiale Anlage an dem Stutzen wird das Innengehäuse durch den Stutzen in Folge der thermischen Ausdehnung durch Formschluss gestützt.

Weiterhin bevorzugt zeigt das umgebördelte Ende des Innengehäuses in axialer Richtung der Turbinenraddrehachse vom Turbinengehäuse weg. Weiterhin besonders bevorzugt zeigt das umgebördelte Ende auch in radialer Richtung der Turbinenraddrehachse von dieser weg. Hierdurch wird sichergestellt, dass die Strömung des durch den Turbolader strömenden Abgases und/oder Frischgases niemals direkt auf den zwischen dem umgebördelten Ende und dem Stutzen ausgebildeten Spalt strömt. Die Druckdichtigkeit wird hierdurch weiter erhöht.

In einer weiteren bevorzugten Ausführungsvariante der vorliegenden Erfindung wird der Pressring an dem umgebördelten Ende und/oder einer Innenfläche des Stutzens zur Anlage kommend, angeordnet. Vorzugsweise erfolgt die Anordnung dabei formschlüssig und reibschlüssig. Im Falle dass der Pressring an einer Innenfläche des Stutzens sowie an dem umgebördelten Ende zur Anlage kommt, erfolgt eine weitere Abdichtung des zwischen umgebördeltem Ende und Stutzen entstehenden Spaltes.

Zur Erhöhung der Druckdichtigkeit und der Festigkeit der Verbindung ist zwischen dem Pressring und dem umgebördelten Ende weiterhin ein Lotspalt ausgebildet, vorzugsweise ist in dem Lotspalt eine stoffschlüssige Verbindung, insbesondere eine Lotverbindung, ausgebildet. Die Lotverbindung beugt einer Verdrehung während der Herstellung und/oder Bearbeitung des erfindungsgemäßen Turboladergehäuses entgegen. Weiterhin wird durch die Lotverbindung die Wärmeleitung zwischen den einzelnen Bauteilen, also von Pressring über Innengehäuse zu Stutzen, gefördert. In der Folge reduziert sich die Bauteilbelastung an kritischen Punkten durch lokale Erwärmung bzw. Überhitzung.

In einer weiteren vorteilhaften Ausführungsvariante der vorliegenden Erfindung wird zwischen dem Pressring und der Innenfläche des Flansches eine zusätzliche formschlüssige Verbindung der sich jeweils berührenden Oberflächen ausgebildet, vorzugsweise handelt es sich dabei um eine Verzahnung, insbesondere eine Mikroverzahnung der Oberflächen. Beispielsweise kann diese Verzahnung durch eine Anrauhung beider Oberflächen oder aber auch nur einer Oberfläche erfolgen. Eine Verdrehung des Innengehäuses zu dem Flanschkragen wird durch die Verzahnung verhindert.

In einer weiteren vorteilhaften Ausführungsvariante der vorliegenden Erfindung wird zwischen dem Flanschkragen und dem um den Flanschkragen umgebördelten Ende des Innengehäuses eine zusätzliche formschlüssige Verbindung der sich berührenden Oberflächen ausgebildet, vorzugsweise eine Verzahnung und/oder zwischen einer Turbinenseite des Stutzens und dem dort zumindest abschnittsweise anliegenden Innengehäuse eine zusätzliche formschlüssige Verbindung der sich berührenden Oberflächen, vorzugsweise eine Verzahnung, insbesondere eine Mikroverzahnung ausgebildet. Auch hier wird während des Herstellungsprozesses und/oder während des Betriebs des erfindungsgemäßen Turboladers ein Verdrehen und/oder Verrutschen, insbesondere im Koppelungsbereich, verhindert.

Bei den Verzahnungen handelt es sich vorzugsweise weiterhin um axial und/oder radial orientierte Verzahnungen. Hierbei ist eine Ausrichtung der Zahnstruktur unter der Richtungsangabe zu verstehen.

In einer weiteren bevorzugten Ausführungsvariante der vorliegenden Erfindung ist die Verzahnung zusätzlich verlötet.

In einer bevorzugten Ausführungsvariante wird der Pressring aus Edelstahl hergestellt. Bevorzugt wird eine Stahllegierung zur Herstellung des Pressrings verwendet, welche nachfolgend aufgelistete chemische Bestandteile, ausgedrückt in Gew.-% aufweist:

| | |
|---|---|
| Kohlenstoff (C) | ≤ 0,20 |
| Silizium (Si) | ≤ 1,50 bis 2,00 |
| Mangan (Mn) | ≤ 2,00 |
| Phosphor (P) | ≤ 0,045 |
| Schwefel (S) | ≤ 0,015 |
| Chrom (Cr) | 19,00 bis 21,00 |
| Nickel (Ni) | 11,00 bis 13,00 |
| Stickstoff (N) | ≤ 0,11. |

Bevorzugt weist die eingesetzte Edelstahllegierung eine Streckgrenze RP 0,2 von 230 N/mm² auf. Die Zugfestigkeit beträgt besonders bevorzugt 550 N/mm² bis 750 N/mm².

Im Rahmen der Erfindung ist es hier jedoch auch möglich, ein Stahl der Werkstoffnummer 1.4541 (X6CrNiTi18-10), oder der Werkstoffnummer 1.4571 (X6CrNiMoTi17-12-2) einzusetzen. Bei Abgastemperaturen von >900° C, wie sie bei Ottomotoren auftreten, können z. B. auch Werkstoffe mit den Werkstoffnummern 1.4841, 1.4845, 1.4876, 2.4851 und 2.4856 verwendet werden. Bei geringer zu erwartenden Abgastemperaturen (<900° C), beispielsweise bei einem Dieselverbrennungsmotor, ist es auch möglich, einen Werkstoff mit der Werkstoffnummer 1.4509 (X2CrTiNb18) oder aber einen Werkstoff mit der Werkstoffnummer 1.4512 (X2CrTi12) einzusetzen. Ebenso eignen sich Werkstoffe mit den Werkstoffnummern 1.4521 oder 1.4511.

Wichtig ist im Rahmen der Erfindung, dass sowohl der Werkstoff des Flansches, als auch der Werkstoff des Pressringes gleich sind, sodass ein gleiches Ausdehnungsverhalten erzeugt wird, was sich besonders vorteilig auf die hergestellte Abdichtung auswirkt.

Weitere Vorteile, Merkmale, Eigenschaften und Aspekte der vorliegenden Erfindung sind Bestandteil der folgenden Beschreibung. Bevorzugte Ausführungsvarianten werden in der schematischen Figur dargestellt. Diese dient dem einfachen Verständnis der Erfindung.

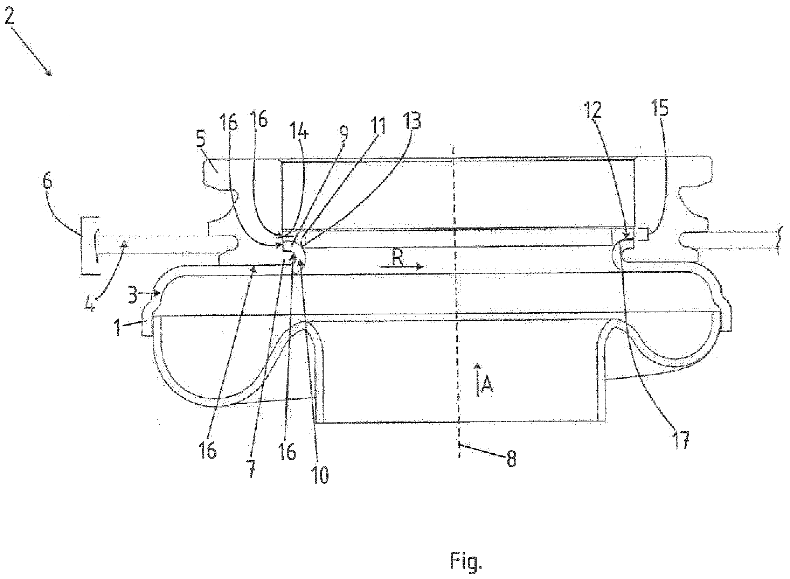

In der Figur werden für gleiche oder ähnliche Bauteile dieselben Bezugszeichen verwendet, auch wenn eine wiederholte Beschreibung aus Vereinfachungsgründen entfällt.

Die Figur zeigt ein erfindungsgemäßes Turbinengehäuse 1 eines Abgasturboladers 2, aufweisend ein Innengehäuse 3 und ein Außengehäuse 4. Das Innengehäuse 3 ist mit einem Stutzen 5 zur Anbindung an ein hier nicht näher dargestelltes Lagergehäuse gekoppelt. Im Koppelungsbereich 6 weist der Stutzen 5 einen Flanschkragen 7 auf, der wulstartig in radialer Richtung R auf die Turbinenraddrehachse 8 zeigend ausgebildet ist.

Der Flanschkragen 7 wird von dem Innengehäuse 3 in axialer Richtung A der Turbinenraddrehachse 8 im Koppelungsbereich durchgriffen und ist an einem Ende 9 um den Flanschkragen 7 umgebördelt. Die Umbördelung ist im Querschnitt im Wesentlichen C-förmig 10 konfiguriert. Zur Erhöhung des durch die Bördelung hergestellten Presssitzes ist ein Pressring 11 an dem umgebördelten Ende 9 derart angeordnet, dass es zu einer form- und kraftschlüssigen Koppelung 12 mit einer Außenseite des umgebördelten Endes 9 sowie einer Innenfläche 14 des Stutzens 5 zur Anlage kommt.

Zwischen der Innenfläche 14 des Stutzens 5 und dem Pressring 11 und/oder zwischen dem umgebördelten Ende 9 und dem Flanschkragen 7 und/oder zwischen dem Innengehäuse 3 und dem Stutzen 5 in einem radialen Anlagebereich 15 können erfindungsgemäß Mikroverzahnungen 16 ausgebildet sein. Zwischen dem Pressring 11 selber und der Außenseite 13 des umgebördelten Endes 9 ist erfindungsgemäß optional ein Lotspalt mit einer darin befindlichen Lotverbindung 17 ausgebildet.

### Bezugszeichen:

- 1 -: Turbinengehäuse
- 2 -: Abgasturbolader
- 3 -: Innengehäuse
- 4 -: Außengehäuse
- 5 -: Stutzen
- 6 -: Koppelungsbereich
- 7 -: Flanschkragen
- 8 -: Turbinenraddrehachse
- 9 -: Ende
- 10 -: C-förmig
- 11 -: Pressring
- 12 -: form- und kraftschlüssige Koppelung
- 13 -: Außenseite zu 9
- 14 -: Innenfläche
- 15 -: radialer Anlagebereich
- 16 -: Mikroverzahnung
- 17 -: Lotspalt mit Lotverbindung

- R -: Radialrichtung
- A -: Axialrichtung

## Patentansprüche

1. Turbinengehäuse (1) eines Abgasturboladers (2), welches ein Außengehäuse (4) und ein Innengehäuse (3) aufweist, wobei das Innengehäuse (3) mit einem rohrförmigen Stutzen (5) zur Anbindung eines Lagergehäuses eines Turbinenrades gekoppelt ist, wobei das Innengehäuse (3) und der Stutzen (5) formschlüssig miteinander gekoppelt sind, **dadurch gekennzeichnet, dass** das Innengehäuse (3) den Stutzen (5) durchgreift und an einem Flanschkragen (7) des Stutzens (5) radial nach außen umgebördelt ist, wobei an dem umgebördelten Ende (9) ein Pressring (11) zur zusätzlichen Lagefixierung angeordnet ist.

2. Turbinengehäuse nach Anspruch 1, **dadurch gekennzeichnet, dass** das umgebördelte Ende (9) des Innengehäuses (3) eine im Querschnitt C-förmige (10) Kontur aufweist.

3. Turbinengehäuse nach Anspruch 1 oder 2, **dadurch gekennzeichnet, dass** der Flanschkragen (7) in radialer Richtung (R) der Turbinenraddrehachse (8) zeigend wulstartig ausgebildet ist.

4. Turbinengehäuse nach einem der Ansprüche 1 bis 3, **dadurch gekennzeichnet, dass** das Innengehäuse (3) in radialer Richtung (R) zumindest abschnittsweise an dem Stutzen (5) anliegt.

5. Turbinengehäuse nach einem der Ansprüche 1 bis 4, **dadurch gekennzeichnet, dass** das umgebördelte Ende (9) in axialer Richtung (A) der Turbinenraddrehachse (8) vom Turbinengehäuse (1) wegzeigend angeordnet ist.

6. Turbinengehäuse nach einem der Ansprüche 1 bis 5, **dadurch gekennzeichnet, dass** der Pressring (11) an dem umgebördelten Ende (9) und/oder einer Innenfläche (14) des Stutzens (5) zur Anlage kommt, vorzugsweise reibschlüssig.

7. Turbinengehäuse nach einem der Ansprüche 1 bis 6, **dadurch gekennzeichnet, dass** zwischen dem Pressring (11) und dem umgebördelten Ende (9) ein Lotspalt ausgebildet ist, vorzugsweise eine stoffschlüssige Verbindung, insbesondere eine Lotverbindung.

8. Turbinengehäuse nach einem der Ansprüche 1 bis 7, **dadurch gekennzeichnet, dass** zwischen dem Pressring (11) und der Innenfläche (14) des Stutzens (5) eine zusätzliche formschlüssige Verbindung der sich berührenden Oberflächen ausgebildet ist, vorzugsweise eine Verzahnung.

9. Turbinengehäuse nach einem der Ansprüche 1 bis 8, **dadurch gekennzeichnet, dass** zwischen dem Flanschkragen (7) und dem um den Flanschkragen (7) umgebördelten Ende (9) des Innengehäuses (3) eine zusätzliche formschlüssige Verbindung der sich berührenden Oberflächen ausgebildet ist, vorzugsweise eine Verzahnung und/oder dass zwischen einer Turbinenseite des Stutzens (5) und dem dort zumindest abschnittsweise anliegenden Innengehäuse (3) eine zusätzliche formschlüssige Verbindung der sich berührenden Oberflächen ausgebildet ist, vorzugsweise eine Verzahnung.

10. Turbinengehäuse nach Anspruch 8 oder 9, **dadurch gekennzeichnet, dass** die Verzahnung zusätzlich verlötet ist.

## Claims

1. Turbine housing (1) of an exhaust gas turbocharger (2) comprising an outer housing (4) and an inner housing (3), wherein the inner housing (3) is coupled with a tubular fitting (5) for attachment of a bearing case of a turbine wheel, wherein the inner housing (3) and the fitting (5) are form-fittingly coupled together, **characterised in that** the inner housing (3) traverses the fitting (5) and is bent radially outwards on a flange collar (7) of the fitting (5), wherein a press ring (11) is arranged on the bent end (9) for additional positional fixation.

2. Turbine housing according to claim 1, **characterised in that** the bent end (9) of the inner housing (3) has a contour that is C-shaped in its cross-section (10).

3. Turbine housing according to claim 1 or 2, **characterised in that** the flange collar (7) has a bulged configuration pointing in a radial direction (R) of the rotation axis of the turbine wheel (8).

4. Turbine housing according to any one of the claims 1 to 3, **characterised in that** the inner housing (3) lies adjacent to the fitting (5) at least in sections in a radial direction (R).

5. Turbine housing according to any one of the claims 1 to 4, **characterised in that** the bent end (9) is arranged so as to point in an axial direction (A) of the rotation axis of the turbine wheel (8) away from the turbine housing (1).

6. Turbine housing according to any one of the claims 1 to 5, **characterised in that** the press ring (11) comes to rest against the bent end (9) and/or an inner surface (14) of the fitting (5), preferably by frictional engagement.

7. Turbine housing according to any one of the claims 1 to 6, **characterised in that** a braze gap is formed between the press ring (11) and the bent end (9), preferably a material joint, more particularly a solder joint.

8. Turbine housing according to any one of the claims 1 to 7, **characterised in that** an additional form-fitting connection of the contacting surfaces, preferably a toothing, is formed between the press ring (11) and the inner surface (14) of the fitting (5).

9. Turbine housing according to any one of the claims 1 to 8, **characterised in that** an additional form-fitting connection of the contacting surfaces, preferably a toothing, is formed between the flange collar (7) and the end (9) of the inner housing (3) bent about the flange collar (7) and/or that an additional form-fitting connection of the contacting surfaces, preferably a toothing, is formed between a turbine side of the fitting (5) and the inner housing (3) adjacent there at least in sections.

10. Turbine housing according to claim 8 or 9, **characterised in that** the toothing is additionally soldered.

## Revendications

1. Carter de turbine (1) d'un turbocompresseur à gaz d'échappement (2), qui comporte un carter extérieur (4) et un carter intérieur (3),
dans lequel le carter intérieur (3) est couplé à un embout tubulaire (5) pour la liaison d'un logement de palier d'une roue de turbine
et dans lequel le carter intérieur (3) et l'embout (5) sont couplés l'un à l'autre par concordance de forme,
**caractérisé en ce que** le carter intérieur (3) passe à travers l'embout (5) et est rabattu de façon radiale vers l'intérieur au niveau d'un collet de bride (7) de l'embout (5),
dans lequel un anneau de serrage (11) est agencé au niveau de l'extrémité rabattue (9) en vue d'une fixation supplémentaire en position.

2. Carter de turbine selon la revendication 1, **caractérisé en ce que** l'extrémité rabattue (9) du carter intérieur (3) présente un contour en forme de C (10) en section transversale.

3. Carter de turbine selon la revendication 1 ou 2, **caractérisé en ce que** le collet de bride (7) est conçu à la manière d'un bourrelet pointant dans la direction radiale (R) de l'axe de rotation de roue de turbine (8).

4. Carter de turbine selon l'une des revendications 1 à 3, **caractérisé en ce que** le carter intérieur (3) repose au moins en partie sur l'embout (5) en direction radiale (R).

5. Carter de turbine selon l'une des revendications 1 à 4, **caractérisé en ce que** l'extrémité rabattue (9) est agencée de manière à pointer à l'opposé du carter de turbine (1) dans la direction radiale (A) de l'axe de rotation de roue de turbine (8).

6. Carter de turbine selon l'une des revendications 1 à 5, **caractérisé en ce que** l'anneau de serrage (11) vient s'appuyer contre l'extrémité rabattue (9) et/ou une surface intérieure (14) de l'embout (5), de préférence en frottement.

7. Carter de turbine selon l'une des revendications 1 à 6, **caractérisé en ce qu'**une fente de brasure, de préférence une liaison de matière, en particulier une liaison par brasure, est réalisée entre l'anneau de serrage (11) et l'extrémité rabattue (9).

8. Carter de turbine selon l'une des revendications 1 à 7, **caractérisé en ce qu'**une liaison supplémentaire des surfaces se touchant, liaison par concordance de forme, de préférence une denture, est réalisée entre l'anneau de serrage (11) et la surface intérieure (14) de l'embout (5).

9. Carter de turbine selon l'une des revendications 1 à 8, **caractérisé en ce qu'**une liaison supplémentaire des surfaces se touchant, liaison par concordance de forme, de préférence une denture, est réalisée entre le collet de bride (7) et l'extrémité (9), rabattue autour du collet de bride (7), du carter intérieur (3) et/ou **en ce qu'**une liaison supplémentaire des surfaces se touchant, liaison par concordance de forme, de préférence une denture, est réalisée entre un côté de turbine de l'embout (5) et le carter intérieur (3) reposant là au moins en partie.

10. Carter de turbine selon la revendication 8 ou 9, **caractérisé en ce que** la denture est en plus brasée.
